# EUROPEAN PATENT APPLICATION

(11) **EP 4 404 620 A1**
(43) Date of publication of application: **24.07.2024**
(21) Application number: 22866793.7
(22) Date of filing: 13.09.2022
(51) Int. Cl.: H04W 28/26, H04W 72/04

(54) **RESOURCE RESERVATION METHOD AND APPARATUS, AND TERMINAL**

(30) Priority: 13.09.2021 CN 202111070804
(71) Applicant: Vivo Mobile Communication Co., Ltd., Dongguan, Guangdong 523863 (CN)
(72) Inventor: WANG, Huan, Dongguan, Guangdong 523863 (CN); JI, Zichao, Dongguan, Guangdong 523863 (CN)
(74) Representative: Conti, Marco
(86) International application number: PCT/CN2022/118416
(87) International publication number: WO 2023/036332

(57) **Abstract**

This application discloses a resource reservation method and apparatus, and a terminal, and pertains to the field of communication technologies. The resource reservation method in embodiments of this application includes: receive user equipment determines a to-be-reserved receiving resource. The receive user equipment sends receiving resource reservation signaling. The receiving resource reservation signaling is used to reserve at least one receiving resource of the to-be-reserved receiving resource.

## Description

### CROSS-REFERENCE TO RELATED APPLICATIONS

This application claims priority to Chinese Patent Application No. 202111070804.5, filed on September 13, 2021 in China, which is incorporated herein by reference in its entirety.

### TECHNICAL FIELD

This application pertains to the field of communication technologies, and specifically relates to a resource reservation method and apparatus, and a terminal.

### BACKGROUND

In a 5^{th} generation (5^{th} Generation, 5G) new radio (New Radio, NR) sidelink (SideLink, SL), transmit user equipment (TX UE) performs resource reservation or indication on resources allocated by the transmit user equipment (the reservation is divided into periodic reservation and aperiodic reservation). Reserved resources are used for subsequent physical sidelink control channel (Physical Sidelink Control Channel, PSCCH) or physical sidelink shared channel (Physical Sidelink Share Channel, PSSCH) transmission.

The aperiodic reservation/indication may be implemented by using a time resource assignment (Time resource assignment) field in sidelink control information (Sidelink Control Information, SCI) (at least resources of 1 slot to 32 slots are indicated), and the reserved resources may be used at least for transmission of a same transport block (Transport Block, TB).

The periodic reservation/indication may be implemented by using a periodic reservation (Resource reservation period) field in the SCI, and a periodic resource reserved in a current period may be used for transmission of a next TB. Herein, a frequency domain resource appears periodically, and may be referred to as a periodic resource of the resource.

For the PSCCH or PSSCH transmission, a terminal performs resource reservation on a transmission resource before sending a PSCCH or PSSCH. When performing transmission resource selection, the transmit user equipment monitors transmission resource reservation signaling of a proximity terminal, to avoid a transmission resource reserved by the proximity terminal, and reduce mutual interference between the terminals. To counteract a problem of high transmission path loss/obstruction on a frequency range 2 (Frequency range 2, FR 2) bandwidth, a sidelink terminal may use a directional beam when performing transmission on the FR 2 bandwidth.

However, the resource selection based on the transmission resource reservation signaling may cause a problem of node hiding, node exposure, or the like. For the transmission on the FR 2 bandwidth, the problem of node hiding may become more frequent, and even has negative impact on transmission between near-field terminals.

### SUMMARY

Embodiments of this application provide a resource reservation method and apparatus, and a terminal, so that a problem of node hiding or node exposure caused by transmission resource reservation signaling can be resolved.

According to a first aspect, a resource reservation method is provided, including:
receive user equipment determines to-be-reserved receiving resources.

The receive user equipment sends receiving resource reservation signaling, where the receiving resource reservation signaling is used to reserve at least one receiving resource of the to-be-reserved receiving resources.

According to a second aspect, a resource reservation apparatus is provided, and the apparatus is used in receive user equipment and includes:
a first determining module, configured to determine to-be-reserved receiving resources; and
a first sending module, configured to send receiving resource reservation signaling, where the receiving resource reservation signaling is used to reserve at least one receiving resource of the to-be-reserved receiving resources.

According to a fifth aspect, a terminal is provided. The terminal includes a processor, a memory, and a program or instructions stored in the memory and capable of being run on the processor. When the program or instructions are executed by the processor, the steps of the method according to the first aspect are implemented.

According to a sixth aspect, a terminal is provided. The terminal includes a processor and a communication interface. The processor is configured to determine to-be-reserved receiving resources. The communication interface is configured to send receiving resource reservation signaling. The receiving resource reservation signaling is used to reserve at least one receiving resource of the to-be-reserved receiving resources.

According to a seventh aspect, a readable storage medium is provided. The readable storage medium stores a program or instructions. When the program or instructions are executed by a processor, the steps of the method according to the first aspect are implemented.

According to an eighth aspect, a chip is provided. The chip includes a processor and a communication interface. The communication interface is coupled to the processor. The processor is configured to run a program or instructions to implement the method according to the first aspect.

According to a ninth aspect, a computer program/program product is provided. The computer program/program product is stored in a non-transitory storage medium. The computer program/program product is executed by at least one processor to implement the steps of the method according to the first aspect.

According to a tenth aspect, a communication device is provided. The communication device is configured to perform the method according to the first aspect. In embodiments of this application, the receive user equipment prevents interference from a proximity terminal by reserving the receiving resources. The receive user equipment reserves the receiving resources by sending the receiving resource reservation signaling. The proximity terminal may monitor the receiving resource reservation signaling, to avoid interference to the receive user equipment, and thereby effectively alleviate a problem of node hiding or node exposure.

### BRIEF DESCRIPTION OF DRAWINGS

FIG. 1 is a block diagram of a wireless communication system to which embodiments of this application may be applied;
FIG. 2 is a step flowchart of a resource reservation method according to an embodiment of this application;
FIG. 3 is a schematic diagram of a structure of a resource reservation apparatus according to an embodiment of this application;
FIG. 4 is a first schematic diagram of a structure of a terminal according to an embodiment of this application; and
FIG. 5 is a second schematic diagram of a structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and claims, "and/or" represents at least one of connected objects, and a character "/" generally represents an "or" relationship between associated objects.

It is worth noting that the technology described in embodiments of this application is not limited to long term evolution (Long Term Evolution, LTE)/LTE-Advanced (LTE-Advanced, LTE-A) systems, but may also be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in embodiments of this application are usually used interchangeably, and the described technology may be used not only in the systems and radio technologies mentioned above, but also in other systems and radio technologies. In the following descriptions, a new radio (New Radio, NR) system is described for example purposes, and NR terms are used in most of the following descriptions. However, these technologies may alternatively be applied to applications other than NR system applications, for example, a 6^{th} generation (6^{th} Generation, 6G) communication system.

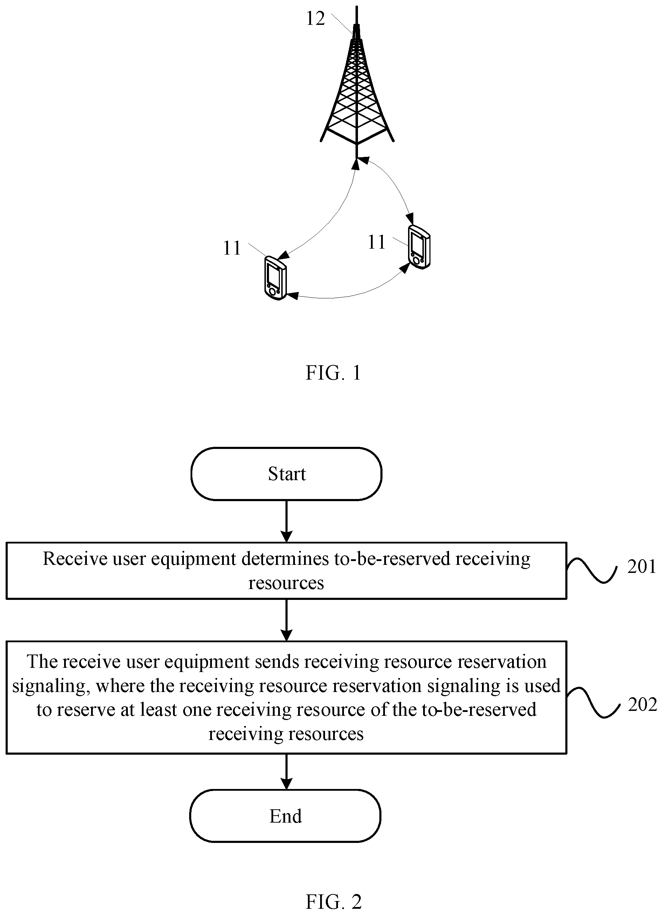

FIG. 1 shows a block diagram of a wireless communication system to which embodiments of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a handheld computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), an in-vehicle device (Vehicle UE, VUE), a pedestrian terminal (Pedestrian UE, PUE), or a smart home (a home device with a wireless communication function, such as a refrigerator, a television, a washing machine, or furniture). The wearable device includes: a smart watch, a smart band, a smart headset, smart glasses, smart jewelry (a smart bracelet, a smart hand chain, a smart ring, a smart necklace, a smart anklet, a smart ankle chain), a smart wristband, smart clothing, a game machine, and the like. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (Evolved NodeB, eNB), a home NodeB, a home evolved NodeB, a wireless local area network (Wireless Local Area Network, WLAN) access point, a wireless fidelity (Wireless Fidelity, Wi-Fi) node, a transmitting receiving point (Transmitting Receiving Point, TRP), or some other appropriate term in the art. As long as the same technical effect is achieved, the base station is not limited to a specific technical term. It should be noted that a base station in an NR system is taken only as an example in embodiments of this application, but a specific type of the base station is not limited.

With reference to the accompanying drawings, the following describes in detail a resource reservation method provided in embodiments of this application by using some embodiments and application scenarios thereof.

As shown in FIG. 2, an embodiment of this application provides a resource reservation method, and the method includes:

Step 201: receive user equipment determines to-be-reserved receiving resources.

Step 202: The receive user equipment sends receiving resource reservation signaling, where the receiving resource reservation signaling is used to reserve at least one receiving resource of the to-be-reserved receiving resources.

For example, the receive user equipment sends the receiving resource reservation signaling by using a receive beam, and a proximity terminal monitors the receiving resource reservation signaling by using a transmit beam. If the proximity terminal can detect that receive user equipment reserves a receiving resource or some receiving resources, the proximity terminal cannot perform sending, by using the transmit beam, on the receiving resource reserved by the receive user equipment, to avoid interference to the receive user equipment.

In at least one embodiment of this application, step 201 includes:

The receive user equipment obtains a transmission resource of transmit user equipment, and determines the transmission resource of the transmit user equipment as the to-be-reserved receiving resource.

That the receive user equipment obtains a transmission resource of transmit user equipment includes:
The receive user equipment demodulates resource reservation information of the transmit user equipment to obtain the transmission resource of the transmit user equipment; or
the receive user equipment receives first signaling sent by the transmit user equipment, where the first signaling indicates the transmission resource of the transmit user equipment. For example, the first signaling is radio resource control (Radio Resource Control, RRC) signaling, a medium access control control element (Medium Access Control Control Element, MAC CE), or a sidelink control information SCI (such as a 2^{nd} stage SCI (2^{nd} stage SCI) or a 3^{rd} stage SCI (3^{rd} stage SCI)).

Alternatively, in at least one embodiment of this application, step 201 includes:
The receive user equipment selects the to-be-reserved receiving resource according to a resource selection rule, that is, the receive user equipment independently selects the receiving resource.

Alternatively, in at least one embodiment of this application, step 201 includes:
The receive user equipment obtains the to-be-reserved receiving resource scheduled by a control node, for example, the control node is a network side device or head node user equipment (User Equipment, UE) (leading-UE).

In at least one optional embodiment of this application, step 202 includes:

The receive user equipment sends the receiving resource reservation signaling in a first time unit. In this embodiment of this application, the receive user equipment should send the corresponding receiving resource reservation signaling as early as possible, to avoid that the foregoing selected to-be-reserved receiving resource is occupied by another terminal.

The first time unit includes any one of the following:
being within a T1^{th} time unit or a T2^{th} time unit after the receive user equipment receives resource notification signaling of the transmit user equipment, where the resource notification signaling is used to notify the transmission resource of the transmit user equipment corresponding to the receive user equipment;
being within a T3^{th} time unit or a T4^{th} time unit after the receive user equipment receives transmission resource reservation signaling of the transmit user equipment, for example, the transmission resource reservation signaling is sent by the transmit user equipment, and is used to reserve a corresponding transmission resource;
being within a T5^{th} time unit or a T6^{th} time unit after the receive user equipment receives resource scheduling signaling of the control node, for example, the control node is a network side device or head node user equipment (User Equipment, UE) (leading-UE);
being within a T7^{th} time unit or a T8^{th} time unit after the receive user equipment triggers receiving resource selection;
being within a time unit before a start moment of the receiving resource reserved by the receiving resource reservation signaling;
being before a T9^{th} time unit or a T10^{th} time unit of the receiving resource reserved by the receiving resource reservation signaling; and
being within a T11^{th} time unit or a T12^{th} time unit after a previously reserved resource of the receive user equipment.

T1, T2, T3, T4, T5, T6, T7, T8, T9, T10, T11, and T12 are positive integers.

Optionally, T1, T2, T3, T4, T5, T6, T7, T8, T9, T10, T11, and T12 may be values specified by a protocol or configured or preconfigured by the control node, and are not specifically limited herein.

For example, for specific TB receiving, the receive user equipment sends M pieces of receiving resource reservation signaling to reserve N receiving resources (M<N). The "previously reserved resource" is a last resource reserved by a previous piece of receiving resource reservation signaling. Sending time of a current piece of receiving resource reservation signaling is "within the T11^{th} time unit or the T12^{th} time unit after the previously reserved resource".

In at least one optional embodiment of this application, the receiving resource reservation signaling should reserve transmission resources as comprehensively as possible. Corresponding step 202 includes:

The receive user equipment sends one piece of receiving resource reservation signaling, where the receiving resource reservation signaling is used to reserve all the to-be-reserved receiving resources, that is, the receiving resource reservation signaling reserves all the to-be-reserved receiving resources at a time.

Alternatively, step 202 includes:
The receive user equipment sends at least one piece of receiving resource reservation signaling, where the receiving resource reservation signaling is used to consecutively reserve the to-be-reserved receiving resources in sequence according to a predefined rule.

For example, the receiving resource reservation signaling may reserve P consecutive selected resources (that is, the to-be-reserved receiving resources). If the receive user equipment sends a plurality of pieces of receiving resource reservation signaling, a first selected resource reserved by the current piece of receiving resource reservation signaling is not later than a next selected resource of the last selected resource reserved by the previous piece of receiving resource reservation signaling.

Alternatively, step 202 includes:
Before each to-be-reserved receiving resource, the receive user equipment sends receiving resource reservation signaling corresponding to each to-be-reserved receiving resource, where the receiving resource reservation signaling is used to reserve a corresponding to-be-reserved receiving resource, or the receiving resource reservation signaling is used to reserve a corresponding to-be-reserved receiving resource and a to-be-reserved receiving resource after the to-be-reserved receiving resource.

For example, the receive user equipment determines A to-be-reserved receiving resources, and the receive user equipment sends A pieces of receiving resource reservation signaling (each piece of receiving resource reservation signaling is sent before a corresponding to-be-reserved receiving resource). If a to-be-reserved receiving resource 1 corresponds to receiving resource reservation signaling 1, the receiving resource reservation signaling 1 is used to reserve the to-be-reserved receiving resource 1, or the receiving resource reservation signaling 1 is used to reserve the to-be-reserved receiving resource 1 and a to-be-reserved receiving resource 2 after the to-be-reserved receiving resource 1.

In at least one embodiment of this application, the receiving resource reservation signaling does not reserve excessive resources, to avoid resource waste caused by an unused reserved resource. Correspondingly, the receiving resource reserved by the receiving resource reservation signaling is consistent with the transmission resource reserved by the transmit user equipment.

For example, the receiving resource reservation signaling sent by the receive user equipment reserves only the transmission resource reserved by the transmit user equipment. Alternatively, the receiving resource reservation signaling sent by the receive user equipment reserves only a resource that can be reserved by a next piece of transmission resource reservation signaling.

In an optional embodiment, step 202 includes:
The receive user equipment sends at least one piece of receiving resource reservation signaling for one transport block TB transmission. For example, for a TB transmission resource, the receive user equipment may reserve the receiving resource for a plurality of times.

Optionally, a quantity of receiving resources that may be reserved by one piece of receiving resource reservation signaling is determined through predefinition, configuration or preconfiguration.

Alternatively, a maximum quantity and/or a minimum quantity of receiving resources that can be reserved by one piece of receiving resource reservation signaling is determined through predefinition, configuration or preconfiguration.

In at least one embodiment of this application, that the receive user equipment sends at least one piece of receiving resource reservation signaling for one transport block TB transmission includes:

The receive user equipment sends first receiving resource reservation signaling for one transport block TB transmission.

After each receiving resource reserved by the first receiving resource reservation signaling is used, the receive user equipment sends second receiving resource reservation signaling; and/or, when a quantity of remaining reserved resources is less than a first threshold, the receive user equipment sends third receiving resource reservation signaling.

In other words, for the TB transmission resource, if the receiving resource is reserved for the plurality of times, each time a new receiving resource is reserved only after a receiving resource reserved last time is used up, or only when the quantity of remaining reserved receiving resources is less than the first threshold.

In at least one optional embodiment of this application, the method further includes:

The receive user equipment determines, based on a resource congestion degree, a quantity of receiving resources reserved by one piece of receiving resource reservation signaling or a quantity of receiving resources reserved for current TB transmission, so that resource waste caused by excessive reservation is minimized during resource congestion.

Optionally, the congestion degree may be determined based on a channel busy ratio (Channel Busy Ratio, CBR).

The quantity of receiving resources reserved by one piece of receiving resource reservation signaling or the quantity of receiving resources reserved for the current TB transmission is in a negative or non-positive relationship with the resource congestion degree. In other words, a higher congestion degree indicates a smaller quantity of receiving resources reserved by one piece of receiving resource reservation signaling or a smaller quantity of receiving resources reserved for the current TB transmission.

Alternatively, in at least one optional embodiment of this application, the method further includes:

The receive user equipment determines, based on a priority of a current TB or quality of service (Quality of Service, QoS) of the current TB, a quantity of receiving resources reserved by one piece of receiving resource reservation signaling or a quantity of receiving resources reserved for current TB transmission. In this way, resources reserved for low-priority TB transmission are reduced, and resource waste caused by excessive reservation is minimized.

Optionally, the quantity of receiving resources reserved by one piece of receiving resource reservation signaling or the quantity of receiving resources reserved for the current TB transmission is in a positive or non-negative relationship with the priority of the TB. In other words, a higher priority indicates a larger quantity of receiving resources reserved by one piece of receiving resource reservation signaling or a larger quantity of receiving resources reserved for the current TB transmission.

In at least one embodiment of this application, a transmission resource for the receiving resource reservation signaling and the receiving resource reserved by the receiving resource reservation signaling are time division multiplexed, to avoid a problem of half duplex. Optionally, when the transmission resource for the receiving resource reservation signaling is selected, a time domain resource on which the selected resource (that is, the to-be-reserved receiving resource) is located is ruled out.

In at least one embodiment of this application, overheads of the receiving resource reservation signaling should be minimized, and the receiving resource reservation signaling meets at least one of the following conditions:
a maximum value that is of a quantity of pieces of receiving resource reservation signaling sent and that corresponds to TB transmission is determined through predefinition, configuration or preconfiguration.

The maximum value of the quantity of pieces of receiving resource reservation signaling sent is related to a retransmission resource quantity selected by a TB. For example, the maximum value is less than or equal to the retransmission resource quantity/N, and N is a value specified by a protocol or a configured or preconfigured value.

Different receiving resource reservation signaling reserves different receiving resources. In other words, the receiving resource reservation signaling cannot repeatedly reserve a same resource, to reduce sending times of the receiving resource reservation signaling. For example, the first resource reserved by the current piece of receiving resource reservation signaling is after the last resource reserved by the previous piece of receiving resource reservation signaling.

An interval between a first receiving resource reserved by the receiving resource reservation signaling and the receiving resource reservation signaling is less than or equal to a second threshold.

An interval between a last receiving resource reserved by the receiving resource reservation signaling and the receiving resource reservation signaling is less than or equal to a third threshold.

An interval between the last receiving resource reserved by the receiving resource reservation signaling and the first receiving resource reserved is less than or equal to a fourth threshold.

The receiving resource reservation signaling is sent by using a minimum resource allocation granularity. For example, the minimum resource allocation granularity is one subchannel (subchannel) or one slot (slot).

The receiving resource reservation signaling may only be retransmitted at a single time.

In at least one embodiment of this application, step 202 includes:

The receive user equipment sends the receiving resource reservation signaling in a first manner. The first manner includes at least one of the following:
carrying the receiving resource reservation signaling by using a physical sidelink control channel PSCCH or a physical sidelink shared channel PSSCH; and
carrying the receiving resource reservation signaling by using a first channel, where the receiving resource reservation signaling carried on the first channel implicitly indicates that a PSCCH or PSSCH associated with the first channel is reserved as a receiving resource, or the receiving resource reservation signaling carried on the first channel explicitly indicates a reserved PSCCH or PSSCH.

Optionally, carrying the receiving resource reservation signaling by using the PSCCH or PSSCH includes:
transmitting the receiving resource reservation signaling by using the 1^{st} stage SCI (1^{st} stage SCI), for example, multiplexing a resource indicator field in the 1^{st} stage SCI for receiving resource reservation, where at least a second resource and/or a third resource indicated in the SCI are/is the receiving resources/is the receiving resource reserved by the receive user equipment; and for another example, a fixed state of reserved bits (reserved bits) in the 1^{st} stage SCI indicates that the signaling is used by the receive user equipment to reserve a resource; or
transmitting the receiving resource reservation signaling by using the 2^{nd} stage SCI or the 3^{rd} stage SCI, for example, newly defining a 2^{nd} stage SCI format or the 3^{rd} stage SCI; and for another example, multiplexing a resource indicator field in the 1^{st} stage SCI for receiving resource reservation indication; or
multiplexing a periodic resource indication (period field) and/or an aperiodic resource indication (time domain resource assignment (Time Domain Resource Assignment, TDRA) field or frequency domain resource assignment (Frequency Domain Resource Assignment, FDRA) field), where a time domain/frequency domain start position of a first resource indicated by the TDRA field or the FDRA field needs to be additionally indicated; or
transmitting the receiving resource reservation signaling by using the RRC or the MAC CE.

A logical channel identity (Logical Channel Identity, LCID) of the MAC CE is specified by a protocol, or is configured or preconfigured. A QoS requirement, such as a priority (priority), latency (latency), or reliability (reliability), for corresponding information transmission is specified by a protocol, or is configured or preconfigured.

In an optional embodiment, the first channel and the associated PSCCH or PSSCH, to avoid a problem of half duplex or the like are time division multiplexed (Time Division Multiplexing, TDM).

In another optional embodiment, the first channel and the associated PSCCH or PSSCH are in different resource pools, to reduce impact of channel decoding of a terminal and the like.

In at least one optional embodiment of this application, a time-frequency resource for sending the receiving resource reservation signaling includes:
a time-frequency resource selected by the receive user equipment, that is, the receive user equipment independently selects the transmission resource for the receiving resource reservation signaling; or
a time-frequency resource indicated by the transmit user equipment or the control node, that is, the transmit user equipment or the control node selects the transmission resource for the receiving resource reservation signaling, and notifies the receive user equipment, where the control node is a base station or leading-UE.

In at least one optional embodiment of this application, a spatial resource for sending the receiving resource reservation signaling includes any one of the following:
a receive beam of the receive user equipment;
a receiving panel of the receive user equipment;
a beam that can cover the receive beam of the receive user equipment; and
an antenna panel that can cover the receiving panel of the receive user equipment.

Optionally, the receive beam of the receive user equipment is the corresponding receive beam received on the reserved receiving resource.

For example, the receive user equipment performs resource reservation by using a preset beam (such as an omnidirectional beam)/a preset panel (such as all panels).

In an optional embodiment, a behavior of independently selecting the receiving resource by the receive user equipment includes:

The receive user equipment performs resource selection only once for one TB transmission.

Optionally, a maximum quantity of resources for one TB transmission is specified by a protocol, or is configured or preconfigured.

Alternatively, the receive user equipment may perform resource selection for a plurality of times for one TB transmission. That is, a proper quantity of transmission resources is selected based on an actual demodulation condition of a TB, to ensure transmission reliability and resource efficiency.

Optionally, the maximum quantity of resources for one TB transmission is specified by a protocol, or is configured or preconfigured.

Optionally, a maximum quantity of resources for resource selection performed each time is specified by a protocol, or is configured or preconfigured. For example, the maximum quantity of resources specified by the protocol is a maximum quantity of resources that can be indicated by the receive user equipment by sending the reservation signaling.

Optionally, a trigger condition for resource reselection includes one or more of the following:

After resource demodulation fails, the receive user equipment is triggered to perform next resource reselection.

A quantity of remaining transmission resources is less than or equal to a preset value, the receive user equipment is triggered to perform next resource reselection.

Optionally, a trigger moment for resource reselection is (or is within) T time units that meet the trigger condition.

In conclusion, in this embodiment of this application, the receive user equipment prevents interference from a proximity terminal by reserving the receiving resources. The receive user equipment reserves the receiving resources by sending the receiving resource reservation signaling. The proximity terminal may monitor the receiving resource reservation signaling, to avoid interference to the receive user equipment, and thereby effectively alleviate a problem of node hiding or node exposure.

It should be noted that the resource reservation method provided in this embodiment of this application may be executed by a resource reservation apparatus, or by a control module, for executing the resource reservation method, in the resource reservation apparatus. In an embodiment of this application, an example in which the resource reservation apparatus performs the resource reservation method is used to describe the resource reservation apparatus provided in this embodiment of this application.

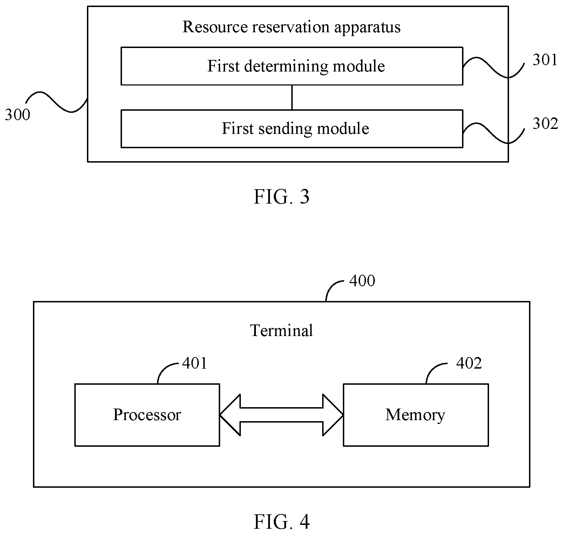

As shown in FIG. 3, an embodiment of this application further provides a resource reservation apparatus 300. The apparatus is used in receive user equipment and includes:
a first determining module 301, configured to determine to-be-reserved receiving resources; and
a first sending module 302, configured to send receiving resource reservation signaling, where the receiving resource reservation signaling is used to reserve at least one receiving resource of the to-be-reserved receiving resources.

In an optional embodiment, the first determining module includes at least one of the following:
a first submodule, configured to: obtain a transmission resource of transmit user equipment, and determine the transmission resource of the transmit user equipment as the to-be-reserved receiving resource;
a second submodule, configured to select the to-be-reserved receiving resource according to a resource selection rule; and
a second submodule, configured to obtain the to-be-reserved receiving resource scheduled by a control node.

In an optional embodiment, the first submodule includes:
a first receiving unit, configured by the receive user equipment to demodulate resource reservation information of the transmit user equipment to obtain the transmission resource of the transmit user equipment; or
a second receiving unit, configured by the receive user equipment to receive first signaling sent by the transmit user equipment, where the first signaling indicates the transmission resource of the transmit user equipment.

In an optional embodiment, the first sending module includes:
a first sending submodule, configured to send the receiving resource reservation signaling in a first time unit, where the first time unit includes any one of the following:
being within a T1^{th} time unit or a T2th time unit after the receive user equipment receives resource notification signaling of transmit user equipment;
being within a T3^{th} time unit or a T4^{th} time unit after the receive user equipment receives transmission resource reservation signaling of the transmit user equipment;
being within a T5^{th} time unit or a T6^{th} time unit after the receive user equipment receives resource scheduling signaling of a control node;
being within a T7^{th} time unit or a T8^{th} time unit after the receive user equipment triggers receiving resource selection;
being within a time unit before a start moment of the receiving resource reserved by the receiving resource reservation signaling;
being before a T9^{th} time unit or a T10^{th} time unit of the receiving resource reserved by the receiving resource reservation signaling; and
being within a T11^{th} time unit or a T12^{th} time unit after a previously reserved resource of the receive user equipment.

T1, T2, T3, T4, T5, T6, T7, T8, T9, T10, T11, and T12 are positive integers.

In an optional embodiment, the first sending module includes:
a second sending submodule, configured to send one piece of receiving resource reservation signaling, where the receiving resource reservation signaling is used to reserve all the to-be-reserved receiving resources; or
a third sending submodule, configured to send at least one piece of receiving resource reservation signaling, where the receiving resource reservation signaling is used to consecutively reserve the to-be-reserved receiving resources in sequence according to a predefined rule; or
a fourth sending submodule, configured to: before each to-be-reserved receiving resource, send receiving resource reservation signaling corresponding to each to-be-reserved receiving resource, where the receiving resource reservation signaling is used to reserve a corresponding to-be-reserved receiving resource, or the receiving resource reservation signaling is used to reserve a corresponding to-be-reserved receiving resource and a to-be-reserved receiving resource after the to-be-reserved receiving resource.

In an optional embodiment, the receiving resource reserved by the receiving resource reservation signaling is consistent with a transmission resource reserved by transmit user equipment.

In an optional embodiment, the first sending module includes:
a fifth sending submodule, configured to send at least one piece of receiving resource reservation signaling for one transport block TB transmission.

In an optional embodiment, a quantity of receiving resources that can be reserved by one piece of receiving resource reservation signaling is determined through predefinition, configuration or preconfiguration; or
a maximum quantity and/or a minimum quantity of receiving resources that can be reserved by one piece of receiving resource reservation signaling is determined through predefinition, configuration or preconfiguration.

In an optional embodiment, the fifth sending submodule includes:
a first sending unit, configured to send first receiving resource reservation signaling for one transport block TB transmission; and
a second sending unit, configured to: after each receiving resource reserved by the first receiving resource reservation signaling is used, send second receiving resource reservation signaling; and/or, when a quantity of remaining reserved resources is less than a first threshold, send third receiving resource reservation signaling.

In an optional embodiment, the apparatus further includes:
a first quantity determining module, configured to determine, based on a resource congestion degree, a quantity of receiving resources reserved by one piece of receiving resource reservation signaling or a quantity of receiving resources reserved for current TB transmission; or
a second quantity determining module, configured to determine, based on a priority of a current TB or quality of service QoS of the current TB, a quantity of receiving resources reserved by one piece of receiving resource reservation signaling or a quantity of receiving resources reserved for current TB transmission.

In an optional embodiment, the quantity of receiving resources reserved by one piece of receiving resource reservation signaling or the quantity of receiving resources reserved for the current TB transmission is in a negative or non-positive relationship with the resource congestion degree; or
the quantity of receiving resources reserved by one piece of receiving resource reservation signaling or the quantity of receiving resources reserved for the current TB transmission is in a positive or non-negative relationship with the priority of the TB.

In an optional embodiment, a transmission resource for the receiving resource reservation signaling and the receiving resource reserved by the receiving resource reservation signaling are time division multiplexed.

In an optional embodiment, the receiving resource reservation signaling meets at least one of the following conditions:
a maximum value that is of a quantity of pieces of receiving resource reservation signaling sent and that corresponds to TB transmission is determined through predefinition, configuration or preconfiguration;
the maximum value of the quantity of pieces of receiving resource reservation signaling sent is related to a retransmission resource quantity selected by a TB;
different receiving resource reservation signaling reserves different receiving resources;
an interval between a first receiving resource reserved by the receiving resource reservation signaling and the receiving resource reservation signaling is less than or equal to a second threshold;
an interval between a last receiving resource reserved by the receiving resource reservation signaling and the receiving resource reservation signaling is less than or equal to a third threshold;
an interval between the last receiving resource reserved by the receiving resource reservation signaling and the first receiving resource reserved is less than or equal to a fourth threshold; and
the receiving resource reservation signaling is sent by using a minimum resource allocation granularity.

In an optional embodiment, the first sending module includes:
a sixth sending submodule, configured to send the receiving resource reservation signaling in a first manner, where the first manner includes at least one of the following:
carrying the receiving resource reservation signaling by using a physical sidelink control channel PSCCH or a physical sidelink shared channel PSSCH; and
carrying the receiving resource reservation signaling by using a first channel, where the receiving resource reservation signaling carried on the first channel implicitly indicates that a PSCCH or PSSCH associated with the first channel is reserved as a receiving resource, or the receiving resource reservation signaling carried on the first channel explicitly indicates a reserved PSCCH or PSSCH.

In an optional embodiment, a time-frequency resource for sending the receiving resource reservation signaling includes:
a time-frequency resource selected by the receive user equipment; or
a time-frequency resource indicated by transmit user equipment or a control node.

In an optional embodiment, a spatial resource for sending the receiving resource reservation signaling includes any one of the following:
a receive beam of the receive user equipment;
a receiving panel of the receive user equipment;
a beam that can cover the receive beam of the receive user equipment; and
an antenna panel that can cover the receiving panel of the receive user equipment.

In this embodiment of this application, the receive user equipment prevents interference from a proximity terminal by reserving the receiving resources. The receive user equipment reserves the receiving resources by sending the receiving resource reservation signaling. The proximity terminal may monitor the receiving resource reservation signaling, to avoid interference to the receive user equipment, and thereby effectively alleviate a problem of node hiding or node exposure.

It should be noted that the resource reservation apparatus provided in this embodiment of this application is an apparatus that can execute the resource reservation method. In this case, all embodiments of the resource reservation method are applicable to the apparatus, and a same or similar beneficial effect can be achieved.

The resource reservation apparatus in this embodiment of this application may be an apparatus, an apparatus or electronic device with an operating system, or may be a component, an integrated circuit, or a chip in a terminal. The apparatus or electronic device may be a mobile terminal, or a non-mobile terminal. For example, the mobile terminal may include but is not limited to the foregoing listed types of the terminal 11. The non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The resource reservation apparatus provided in this embodiment of this application can implement processes implemented in the method embodiments in FIG. 1 to FIG. 2, and a same technical effect can be achieved. To avoid repetition, details are not described herein again.

Optionally, as shown in FIG. 4, an embodiment of this application further provides a terminal 400. The terminal includes a processor 401, a memory 402, a program or instructions stored in the memory 402 and capable of being run on the processor 401. When the program or instructions are executed by the processor 401, the processes in the foregoing resource reservation method embodiment are implemented, and a same technical effect can be achieved. To avoid repetition, details are not described herein again.

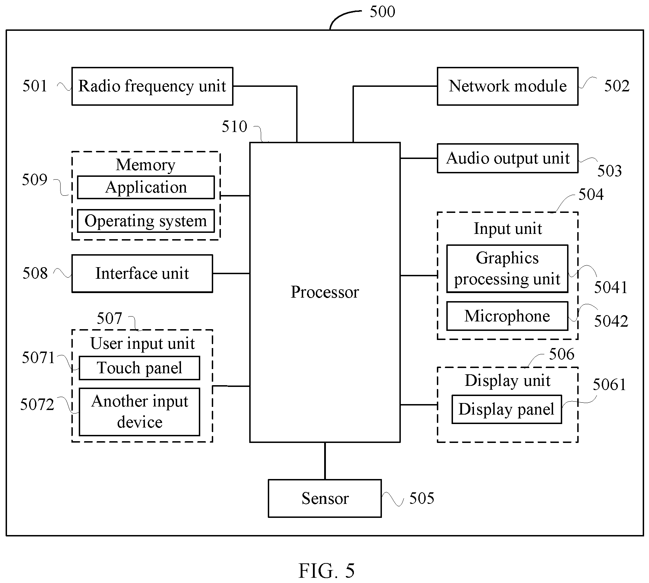

An embodiment of this application further provides a terminal. The terminal includes a processor and a communication interface. The processor is configured to determine to-be-reserved receiving resources. The communication interface is configured to send receiving resource reservation signaling. The receiving resource reservation signaling is used to reserve at least one receiving resource of the to-be-reserved receiving resources. This terminal embodiment corresponds to the foregoing method embodiment on the terminal side. Each implementation process and implementation of the foregoing method embodiment may be applicable to this terminal embodiment, and a same technical effect can be achieved. FIG. 5 is a schematic diagram of a hardware structure of a terminal for implementing embodiments of this application.

The terminal 500 includes but is not limited to at least a part of components of a radio frequency unit 501, a network module 502, an audio output unit 503, an input unit 504, a sensor 505, a display unit 506, a user input unit 507, an interface unit 508, a memory 509, and a processor 510, and the like.

A person skilled in the art may understand that the terminal 500 may further include a power supply (such as a battery) that supplies power to each component. The power supply may be logically connected to the processor 510 through a power management system, to implement functions such as charging and discharging management, and power consumption management by using the power management system. The terminal structure shown in FIG. 5 constitutes no limitation on the terminal, and the terminal may include more or fewer components than those shown in the figure, or combine some components, or have different component arrangements. Details are not described herein.

It should be understood that, in this embodiment of this application, the input unit 504 may include a graphics processing unit (Graphics Processing Unit, GPU) 5041 and a microphone 5042. The graphics processing unit 5041 processes image data of a still picture or a video obtained by an image capture apparatus (such as a camera) in a video capture mode or an image capture mode. The display unit 506 may include a display panel 5061, and the display panel 5061 may be configured in a form of a liquid crystal display, an organic light-emitting diode, or the like. The user input unit 507 includes a touch panel 5071 and another input device 5072. The touch panel 5071 is also referred to as a touchscreen. The touch panel 5071 may include two parts: a touch detection apparatus and a touch controller. The another input device 5072 may include but is not limited to a physical keyboard, a functional button (such as a volume control button or a power on/off button), a trackball, a mouse, and a joystick. Details are not described herein.

In this embodiment of this application, the radio frequency unit 501 receives downlink data from a network side device and then sends the downlink data to the processor 510 for processing; and sends uplink data to the network side device. Usually, the radio frequency unit 501 includes but is not limited to an antenna, at least one amplifier, a transceiver, a coupler, a low noise amplifier, a duplexer, and the like.

The memory 509 may be configured to store a software program or instructions as well as various data. The memory 509 may mainly include a program or instruction storage area and a data storage area. The program or instruction storage area may store an operating system, an application or instructions required for at least one function (for example, a sound play function or an image play function), and the like. Further, the memory 509 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 510 may include one or more processing units. Optionally, the processor 510 may integrate an application processor and a modem processor. The application processor mainly processes an operating system, a user interface, an application or instructions, and the like. The modem processor, such as a baseband processor, mainly processes wireless communication. It may be understood that, alternatively, the modem processor may not be integrated into the processor 510.

The processor 510 is configured to determine to-be-reserved receiving resources.

The radio frequency unit 501 is configured to send receiving resource reservation signaling. The receiving resource reservation signaling is used to reserve at least one receiving resource of the to-be-reserved receiving resources.

In this embodiment of this application, the receive user equipment prevents interference from a proximity terminal by reserving the receiving resources. The receive user equipment reserves the receiving resources by sending the receiving resource reservation signaling. The proximity terminal may monitor the receiving resource reservation signaling, to avoid interference to the receive user equipment, and thereby effectively alleviate a problem of node hiding or node exposure.

It should be noted that the terminal provided in this embodiment of this application is a terminal that can execute the resource reservation method. In this case, all embodiments of the resource reservation method are applicable to the terminal, and a same or similar beneficial effect can be achieved.

An embodiment of this application further provides a readable storage medium. The readable storage medium stores a program or instructions. When the program or instructions are executed by a processor, the processes in the foregoing resource reservation method embodiment are implemented, and a same technical effect can be achieved. To avoid repetition, details are not described herein again.

The processor is the processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions, to implement the processes in the foregoing resource reservation method embodiment, and a same technical effect can be achieved. To avoid repetition, details are not described herein again.

It should be understood that the chip mentioned in this embodiment of this application may also be referred to as a system-level chip, a system chip, a chip system, or a system on chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A resource reservation method, comprising:
determining, by receive user equipment, to-be-reserved receiving resources; and
sending, by the receive user equipment, receiving resource reservation signaling, wherein the receiving resource reservation signaling is used to reserve at least one receiving resource of the to-be-reserved receiving resources.

2. The method according to claim 1, wherein the determining, by receive user equipment, to-be-reserved receiving resources comprises:
obtaining, by the receive user equipment, a transmission resource of transmit user equipment, and determining the transmission resource of the transmit user equipment as the to-be-reserved receiving resource; or
selecting, by the receive user equipment, the to-be-reserved receiving resource according to a resource selection rule; or
obtaining, by the receive user equipment, the to-be-reserved receiving resource scheduled by a control node.

3. The method according to claim 2, wherein the obtaining, by the receive user equipment, a transmission resource of transmit user equipment comprises:
demodulating, by the receive user equipment, resource reservation information of the transmit user equipment to obtain the transmission resource of the transmit user equipment; or
receiving, by the receive user equipment, first signaling sent by the transmit user equipment, wherein the first signaling indicates the transmission resource of the transmit user equipment.

4. The method according to claim 1, wherein the sending, by the receive user equipment, receiving resource reservation signaling comprises:
sending, by the receive user equipment, the receiving resource reservation signaling in a first time unit, wherein the first time unit comprises any one of the following:
being within a T1^{th} time unit or a T2^{th} time unit after the receive user equipment receives resource notification signaling of transmit user equipment;
being within a T3^{th} time unit or a T4^{th} time unit after the receive user equipment receives transmission resource reservation signaling of the transmit user equipment;
being within a T5^{th} time unit or a T6^{th} time unit after the receive user equipment receives resource scheduling signaling of a control node;
being within a T7^{th} time unit or a T8^{th} time unit after the receive user equipment triggers receiving resource selection;
being within a time unit before a start moment of the receiving resource reserved by the receiving resource reservation signaling;
being before a T9^{th} time unit or a T10^{th} time unit of the receiving resource reserved by the receiving resource reservation signaling; and
being within a T11^{th} time unit or a T12^{th} time unit after a previously reserved resource of the receive user equipment, wherein
T1, T2, T3, T4, T5, T6, T7, T8, T9, T10, T11, and T12 are positive integers.

5. The method according to claim 1, wherein the sending, by the receive user equipment, receiving resource reservation signaling comprises:
sending, by the receive user equipment, one piece of receiving resource reservation signaling, wherein the receiving resource reservation signaling is used to reserve all the to-be-reserved receiving resources; or
sending, by the receive user equipment, at least one piece of receiving resource reservation signaling, wherein the receiving resource reservation signaling is used to consecutively reserve the to-be-reserved receiving resources in sequence according to a predefined rule; or
before each to-be-reserved receiving resource, sending, by the receive user equipment, receiving resource reservation signaling corresponding to each to-be-reserved receiving resource, wherein the receiving resource reservation signaling is used to reserve a corresponding to-be-reserved receiving resource, or the receiving resource reservation signaling is used to reserve a corresponding to-be-reserved receiving resource and a to-be-reserved receiving resource after the to-be-reserved receiving resource.

6. The method according to claim 1, wherein the receiving resource reserved by the receiving resource reservation signaling is consistent with a transmission resource reserved by transmit user equipment.

7. The method according to claim 1, wherein the sending, by the receive user equipment, receiving resource reservation signaling comprises:
sending, by the receive user equipment, at least one piece of receiving resource reservation signaling for one transport block TB transmission.

8. The method according to claim 7, wherein a quantity of receiving resources that can be reserved by one piece of receiving resource reservation signaling is determined through predefinition, configuration or preconfiguration; or
a maximum quantity and/or a minimum quantity of receiving resources that can be reserved by one piece of receiving resource reservation signaling is determined through predefinition, configuration or preconfiguration.

9. The method according to claim 7, wherein the sending, by the receive user equipment, at least one piece of receiving resource reservation signaling for one transport block TB transmission comprises:
sending, by the receive user equipment, first receiving resource reservation signaling for one transport block TB transmission; and
after each receiving resource reserved by the first receiving resource reservation signaling is used, sending, by the receive user equipment, second receiving resource reservation signaling; and/or, when a quantity of remaining reserved resources is less than a first threshold, sending, by the receive user equipment, third receiving resource reservation signaling.

10. The method according to claim 7, wherein the method further comprises:
determining, by the receive user equipment based on a resource congestion degree, a quantity of receiving resources reserved by one piece of receiving resource reservation signaling or a quantity of receiving resources reserved for current TB transmission; or
determining, by the receive user equipment based on a priority of a current TB or quality of service QoS of the current TB, a quantity of receiving resources reserved by one piece of receiving resource reservation signaling or a quantity of receiving resources reserved for current TB transmission.

11. The method according to claim 10, wherein
the quantity of receiving resources reserved by one piece of receiving resource reservation signaling or the quantity of receiving resources reserved for the current TB transmission is in a negative or non-positive relationship with the resource congestion degree; or
the quantity of receiving resources reserved by one piece of receiving resource reservation signaling or the quantity of receiving resources reserved for the current TB transmission is in a positive or non-negative relationship with the priority of the TB.

12. The method according to claim 1, wherein a transmission resource for the receiving resource reservation signaling and the receiving resource reserved by the receiving resource reservation signaling are time division multiplexed.

13. The method according to claim 1, wherein the receiving resource reservation signaling meets at least one of the following conditions:
a maximum value that is of a quantity of pieces of receiving resource reservation signaling sent and that corresponds to TB transmission is determined through predefinition, configuration or preconfiguration;
the maximum value of the quantity of pieces of receiving resource reservation signaling sent is related to a retransmission resource quantity selected by a TB;
different receiving resource reservation signaling reserves different receiving resources;
an interval between a first receiving resource reserved by the receiving resource reservation signaling and the receiving resource reservation signaling is less than or equal to a second threshold;
an interval between a last receiving resource reserved by the receiving resource reservation signaling and the receiving resource reservation signaling is less than or equal to a third threshold;
an interval between the last receiving resource reserved by the receiving resource reservation signaling and the first receiving resource reserved is less than or equal to a fourth threshold; and
the receiving resource reservation signaling is sent by using a minimum resource allocation granularity.

14. The method according to claim 1, wherein the sending, by the receive user equipment, receiving resource reservation signaling comprises:
sending, by the receive user equipment, the receiving resource reservation signaling in a first manner, wherein the first manner comprises at least one of the following:
carrying the receiving resource reservation signaling by using a physical sidelink control channel PSCCH or a physical sidelink shared channel PSSCH; and
carrying the receiving resource reservation signaling by using a first channel, wherein the receiving resource reservation signaling carried on the first channel implicitly indicates that a PSCCH or PSSCH associated with the first channel is reserved as a receiving resource, or the receiving resource reservation signaling carried on the first channel explicitly indicates a reserved PSCCH or PSSCH.

15. The method according to claim 1, wherein a time-frequency resource for sending the receiving resource reservation signaling comprises:
a time-frequency resource selected by the receive user equipment; or
a time-frequency resource indicated by transmit user equipment or a control node.

16. The method according to claim 1, wherein a spatial resource for sending the receiving resource reservation signaling comprises any one of the following:
a receive beam of the receive user equipment;
a receiving panel of the receive user equipment;
a beam that can cover the receive beam of the receive user equipment; and
an antenna panel that can cover the receiving panel of the receive user equipment.

17. A resource reservation apparatus, used in receive user equipment, wherein the apparatus comprises:
a first determining module, configured to determine to-be-reserved receiving resources; and
a first sending module, configured to send receiving resource reservation signaling, wherein the receiving resource reservation signaling is used to reserve at least one receiving resource of the to-be-reserved receiving resources.

18. The apparatus according to claim 17, wherein the first determining module comprises at least one of the following:
a first submodule, configured to: obtain a transmission resource of transmit user equipment, and determine the transmission resource of the transmit user equipment as the to-be-reserved receiving resource;
a second submodule, configured to select the to-be-reserved receiving resource according to a resource selection rule; and
a second submodule, configured to obtain the to-be-reserved receiving resource scheduled by a control node.

19. The apparatus according to claim 18, wherein the first submodule comprises:
a first receiving unit, configured by the receive user equipment to demodulate resource reservation information of the transmit user equipment to obtain the transmission resource of the transmit user equipment; or
a second receiving unit, configured by the receive user equipment to receive first signaling sent by the transmit user equipment, wherein the first signaling indicates the transmission resource of the transmit user equipment.

20. The apparatus according to claim 17, wherein the first sending module comprises:
a first sending submodule, configured to send the receiving resource reservation signaling in a first time unit, wherein the first time unit comprises any one of the following:
being within a T1^{th} time unit or a T2th time unit after the receive user equipment receives resource notification signaling of transmit user equipment;
being within a T3^{th} time unit or a T4^{th} time unit after the receive user equipment receives transmission resource reservation signaling of the transmit user equipment;
being within a T5^{th} time unit or a T6^{th} time unit after the receive user equipment receives resource scheduling signaling of a control node;
being within a T7^{th} time unit or a T8^{th} time unit after the receive user equipment triggers receiving resource selection;
being within a time unit before a start moment of the receiving resource reserved by the receiving resource reservation signaling;
being before a T9^{th} time unit or a T10^{th} time unit of the receiving resource reserved by the receiving resource reservation signaling; and
being within a T11^{th} time unit or a T12^{th} time unit after a previously reserved resource of the receive user equipment, wherein
T1, T2, T3, T4, T5, T6, T7, T8, T9, T10, T11, and T12 are positive integers.

21. The apparatus according to claim 17, wherein the first sending module comprises:
a second sending submodule, configured to send one piece of receiving resource reservation signaling, wherein the receiving resource reservation signaling is used to reserve all the to-be-reserved receiving resources; or
a third sending submodule, configured to send at least one piece of receiving resource reservation signaling, wherein the receiving resource reservation signaling is used to consecutively reserve the to-be-reserved receiving resources in sequence according to a predefined rule; or
a fourth sending submodule, configured to: before each to-be-reserved receiving resource, send receiving resource reservation signaling corresponding to each to-be-reserved receiving resource, wherein the receiving resource reservation signaling is used to reserve a corresponding to-be-reserved receiving resource, or the receiving resource reservation signaling is used to reserve a corresponding to-be-reserved receiving resource and a to-be-reserved receiving resource after the to-be-reserved receiving resource.

22. The apparatus according to claim 17, wherein the receiving resource reserved by the receiving resource reservation signaling is consistent with a transmission resource reserved by transmit user equipment.

23. The apparatus according to claim 17, wherein the first sending module comprises:
a fifth sending submodule, configured to send at least one piece of receiving resource reservation signaling for one transport block TB transmission.

24. The apparatus according to claim 23, wherein a quantity of receiving resources that can be reserved by one piece of receiving resource reservation signaling is determined through predefinition, configuration or preconfiguration; or
a maximum quantity and/or a minimum quantity of receiving resources that can be reserved by one piece of receiving resource reservation signaling is determined through predefinition, configuration or preconfiguration.

25. The apparatus according to claim 23, wherein the fifth sending submodule comprises:
a first sending unit, configured to send first receiving resource reservation signaling for one transport block TB transmission; and
a second sending unit, configured to: after each receiving resource reserved by the first receiving resource reservation signaling is used, send second receiving resource reservation signaling; and/or, when a quantity of remaining reserved resources is less than a first threshold, send third receiving resource reservation signaling.

26. The apparatus according to claim 23, wherein the apparatus further comprises:
a first quantity determining module, configured to determine, based on a resource congestion degree, a quantity of receiving resources reserved by one piece of receiving resource reservation signaling or a quantity of receiving resources reserved for current TB transmission; or
a second quantity determining module, configured to determine, based on a priority of a current TB or quality of service QoS of the current TB, a quantity of receiving resources reserved by one piece of receiving resource reservation signaling or a quantity of receiving resources reserved for current TB transmission.

27. The apparatus according to claim 26, wherein
the quantity of receiving resources reserved by one piece of receiving resource reservation signaling or the quantity of receiving resources reserved for the current TB transmission is in a negative or non-positive relationship with the resource congestion degree; or
the quantity of receiving resources reserved by one piece of receiving resource reservation signaling or the quantity of receiving resources reserved for the current TB transmission is in a positive or non-negative relationship with the priority of the TB.

28. The apparatus according to claim 17, wherein a transmission resource for the receiving resource reservation signaling and the receiving resource reserved by the receiving resource reservation signaling are time division multiplexed.

29. The apparatus according to claim 17, wherein the receiving resource reservation signaling meets at least one of the following conditions:
a maximum value that is of a quantity of pieces of receiving resource reservation signaling sent and that corresponds to TB transmission is determined through predefinition, configuration or preconfiguration;
the maximum value of the quantity of pieces of receiving resource reservation signaling sent is related to a retransmission resource quantity selected by a TB;
different receiving resource reservation signaling reserves different receiving resources;
an interval between a first receiving resource reserved by the receiving resource reservation signaling and the receiving resource reservation signaling is less than or equal to a second threshold;
an interval between a last receiving resource reserved by the receiving resource reservation signaling and the receiving resource reservation signaling is less than or equal to a third threshold;
an interval between the last receiving resource reserved by the receiving resource reservation signaling and the first receiving resource reserved is less than or equal to a fourth threshold; and
the receiving resource reservation signaling is sent by using a minimum resource allocation granularity.

30. The apparatus according to claim 17, wherein the first sending module comprises:
a sixth sending submodule, configured to send the receiving resource reservation signaling in a first manner, wherein the first manner comprises at least one of the following:
carrying the receiving resource reservation signaling by using a physical sidelink control channel PSCCH or a physical sidelink shared channel PSSCH; and
carrying the receiving resource reservation signaling by using a first channel, wherein the receiving resource reservation signaling carried on the first channel implicitly indicates that a PSCCH or PSSCH associated with the first channel is reserved as a receiving resource, or the receiving resource reservation signaling carried on the first channel explicitly indicates a reserved PSCCH or PSSCH.

31. The apparatus according to claim 17, wherein a time-frequency resource for sending the receiving resource reservation signaling comprises:
a time-frequency resource selected by the receive user equipment; or
a time-frequency resource indicated by transmit user equipment or a control node.

32. The apparatus according to claim 17, wherein a spatial resource for sending the receiving resource reservation signaling comprises any one of the following:
a receive beam of the receive user equipment;
a receiving panel of the receive user equipment;
a beam that can cover the receive beam of the receive user equipment; and
an antenna panel that can cover the receiving panel of the receive user equipment.

33. A terminal, comprising a processor, a memory, and a program or instructions stored in the memory and capable of being run on the processor, wherein when the program or instructions are executed by the processor, the steps of the resource reservation method according to any one of claims 1 to 16 are implemented.

34. A readable storage medium, wherein the readable storage medium stores a program or instructions, and when the program or instructions are executed by a processor, the steps of the resource reservation method according to any one of claims 1 to 16 are implemented.

35. A chip, comprising a processor and a communication interface, wherein the communication interface is coupled to the processor, and the processor is configured to run a program or instructions to implement the steps of the resource reservation method according to any one of claims 1 to 16.

36. A computer program product, wherein the computer program product is stored in a non-transitory readable storage medium, and the computer program product is executed by at least one processor to implement the steps of the resource reservation method according to any one of claims 1 to 16.

37. A communication device, configured to perform the steps of the resource reservation method according to any one of claims 1 to 16.
